(19) Europäisches Patentamt
European Patent Office
Office européen des brevets

(11) **EP 2 143 186 B1**

(12) **EUROPÄISCHE PATENTSCHRIFT**

(45) Veröffentlichungstag und Bekanntmachung des Hinweises auf die Patenterteilung:
**06.01.2016 Patentblatt 2016/01**

(21) Anmeldenummer: **08735250.6**

(22) Anmeldetag: **15.04.2008**

(51) Int Cl.:
**H02J 3/18** *(2006.01)*     *H02J 3/38 (2006.01)*

(86) Internationale Anmeldenummer:
**PCT/EP2008/002989**

(87) Internationale Veröffentlichungsnummer:
**WO 2008/128680 (30.10.2008 Gazette 2008/44)**

(54) **WINDENERGIEANLAGE MIT BLINDLEISTUNGSVORGABE**

WIND ENERGY PLANT WITH REACTIVE POWER CONDITION

ÉOLIENNE À PUISSANCE RÉACTIVE NOMINALE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.04.2007 DE 102007018888**

(43) Veröffentlichungstag der Anmeldung:
**13.01.2010 Patentblatt 2010/02**

(73) Patentinhaber: **Senvion GmbH**
**22297 Hamburg (DE)**

(72) Erfinder: **LETAS, Heinz-Hermann**
**23701 Süsel (DE)**

(74) Vertreter: **Glawe, Delfs, Moll**
**Partnerschaft mbB von**
**Patent- und Rechtsanwälten**
**Rothenbaumchaussee 58**
**20148 Hamburg (DE)**

(56) Entgegenhaltungen:
**EP-A- 1 512 869     US-A- 5 798 631**

• **MARIUSZ MALINOWSKI ET AL: "Control of Variable-Speed Type Wind Turbines Using Direct Power Control Space Vector Modulated 3-Level PWM Converter" INDUSTRIAL TECHNOLOGY, 2006. ICIT 2006. IEEE INTERNATIONAL CONFERENCE ON, IEEE, PI, 1. Dezember 2006 (2006-12-01), Seiten 1516-1521, XP031178073 ISBN: 978-1-4244-0725-5**
• **JABR H M ET AL: "Adaptive vector control for slip energy recovery in doubly-fed wind driven induction generator" ELECTRICAL AND COMPUTER ENGINEERING, 2005. CANADIAN CONFERENCE ON SASKATOON, SK, CANADA MAY 1-4, 2005, PISCATAWAY, NJ, USA,IEEE, 1. Mai 2005 (2005-05-01), Seiten 759-762, XP010868918 ISBN: 978-0-7803-8885-7**

**Beschreibung**

Die Erfindung betrifft eine Windenergieanlage mit einem Rotor, einem damit angetriebenen Generator mit einem Umrichter zur Einspeisung elektrischer Leistung in ein Netz über eine Verbindungsleitung und einer Steuereinrichtung, wobei die Steuereinrichtung eine Umrichtersteuerung umfasst, welche zur Kontrolle eines Blindleistungsanteils der Leistung gemäß einem'Vorgabewert ausgebildet ist.

Zum Ausbau der Erzeugung elektrischer Energie mittels Windenergie werden Windenergieanlagen und Windparks mit immer höherer Leistung aufgestellt. Sie befinden sich bevorzugt an Standorten mit großem Windangebot, wie insbesondere auf Erhebungen, an Küsten oder Offshore im Meer. Diese Standorte haben gemeinsam, dass sie meist in dünn oder gar nicht besiedelten Gebieten liegen, in denen das elektrische Netz eine geringe Kapazität aufweist. Um dennoch eine ausreichend hohe Versorgungsqualität aufrecht zu halten, werden verschärfte Anforderungen an die Windenergieanlagen bzw. die Windparks in Bezug auf ihre Netzverträglichkeit gestellt.

Ein wichtiges Kriterium für einen sicheren und regelgerechten Betrieb betrifft das Einspeisen von Blindleistung. Die Anschlusskriterien vieler Netzbetreiber geben enge Vorgaben in Bezug auf den Leistungsfaktor. Es kommt hierbei auf die Verhältnisse am Anschluss an das Netz an. Üblicherweise sind Windenergieanlagen über einen Mittelspannungstransformator, eine Verbindungsleitung und ggf. einen Hochspannungstransformator an das Netz angeschlossen. Alle diese Komponenten bilden Blindwiderstände und beeinflussen somit den Leistungsfaktor. Um die Anschlusskriterien einzuhalten, muss sich der Leistungsfaktor in vorgegebene Grenzen halten und darf sich nicht unkontrolliert verändern.

Eine Kontrolle des Leistungsfaktors kann dadurch erreicht werden, dass er am Anschlusspunkt an das Netz gemessen wird und die Windenergieanlage bzw. der Windpark bei Abweichungen entsprechend nachgeregelt wird. Dazu ist es bekannt, Windenergieanlagen mit Asynchrongeneratoren mit voll steuerbaren Umrichtern auszurüsten (US-A-5,225,712 und Mariusz Malinowski et al.: "Control of Variable-Speed Type Wind Turbines Using Direct Power Control Space Vector Modulated 3-Level PWM Converter"). Eine Umrichtersteuerung ist vorgesehen, die durch gezieltes Schalten der aktiven Elemente des Umrichters den Phasenwinkel der abgegebenen Leistung bestimmt, und damit den Leistungsfaktor der an das Netz abgegebenen Leistung festlegt. Zur Bestimmung des Leistungsfaktors am Anschlusspunkt ist eine verhältnismäßig aufwendige Sensorik vorgesehen, die sowohl Strom wie auch die Spannung phasengerecht bestimmt.

Eine Kontrolle der Blindleistung in einem Windpark ist aus EP 1 512 869 A1 bekannt.

Weiter ist es bekannt, die von der Windenergieanlage abgegebene Leistung bezüglich ihres Blindleistungsanteils zu messen und mit einem Vorgabewert zu vergleichen (US-A-2006/0012181). Aus der Abweichung wird ein Blindleistungsfehler bestimmt und daraus werden, unter weiterer Berücksichtigung der Spannung an den Anschlussklemmen, veränderte Ansteuerungsparameter für den Generator bestimmt. Bei diesem Konzept ist die Blindleistung entkoppelt von der Wirkleistung, so dass die Einhaltung eines bestimmten Leistungsfaktors nicht garantiert werden kann.

Der Erfindung liegt die Aufgabe zugrunde, ausgehend von dem zuerst genannten Stand der Technik eine verbesserte Windenergieanlage bzw. einen Windpark und Verfahren zum Betreiben zu schaffen.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem Rotor, einem damit angetriebenen Generator mit einem Umrichter zur Einspeisung elektrischer Leistung in ein Netz über eine Verbindungsleitung und einer Steuereinrichtung, wobei die Steuereinrichtung eine Umrichtersteuerung umfasst, welche zur Kontrolle eines Blindleistungsanteils der Leistung gemäß einem Vorgabewert ausgebildet ist, ist gemäß der Erfindung ein Primärsteuermodul zur Ausgabe eines Signals für eine Sollblindleistung vorgesehen, das zur stromgeführten Bestimmung der Sollblindleistung in Abhängigkeit von einem Stromflussmaß ausgebildet ist.

Nachfolgend sollen einige verwendete Begriffe erläutert werden:

Unter stromgeführt wird verstanden, dass die Bestimmung der Sollblindleistung allein oder zumindest hauptsächlich auf dem Strom basiert. Nicht unter stromgeführt fällt eine Bestimmung, bei der gleichrangig auf den Strom und die Spannung zurückgegriffen wird.

Unter Primärsteuermodul wird eine Einrichtung verstanden, welche als eigentliche Steuerung fungiert. Sie ist es, die eine Führungsgröße (Stromfluss) mit der gewünschten Stellgröße (Blindleistung) verknüpft. Das Primärsteuermodul ist zu unterscheiden von optionalen Sekundärsteuermodulen, welche die Stellgröße je nach Bedarf in Abhängigkeit von zusätzlichen Parametern modifiziert.

Die Erfindung beruht auf dem Gedanken, mit der stromabhängigen Blindleistungsvorgabe ein einfaches Steuerverfahren bereitzustellen, mit dem dennoch eine gute Anpassung der Blindleistung erreicht wird. Die Erfindung hat erkannt, dass mit dem Abstellen auf den Stromfluss als Führungsgröße nicht nur eine einfach zu handhabende Führungsgröße bereitgestellt wird, sondern damit auch zusätzlich eine Anpassung der Blindleistung an die Wirkleistung erreicht werden kann. Aufwendige Einrichtungen zur Bestimmung des Leistungsfaktors, wie im Stand der Technik verwendet, sind dank der Erfindung entbehrlich. Zwar ist die Anpassung nicht zwingend perfekt, wenn als Stromflussmaß der Scheinstrom verwendet wird, zumal er sich durch Änderungen der Blindleistung ebenfalls unmittelbar ändert. Jedoch ist dies überraschenderweise ohne Nachteil für das erreichte Resultat. Denn die Erfindung macht sich hierbei zunutze, dass sich gerade in den wichtigen höheren Leistungsbereichen der Scheinstrom und der Wirkstrom nur wenig unterscheiden, so dass mit dem Scheinstrom erfindungsgemäß eine sehr gute Approximation der erforderlichen Blindleistung ermöglicht ist.

Ein weiterer Vorteil der Erfindung liegt darin, dass sie mit geringem Aufwand eine Berücksichtigung von Reaktanzen der Verbindungsleitung, insbesondere von Transformatoren für Mittel- und/oder Hochspannung ermöglicht. Mittels der bekannten elektrischen Parameter der Verbindungsleitung kann bestimmt werden, wie der Generator einzustellen ist, um bei dem jeweiligen Stromfluss die gewünschte Blindleistung am Anschlusspunkt an das Netz bereitzustellen. Die Erfindung ermöglicht damit eine schnellere und genauere Kompensation von Reaktanzen als eine herkömmliche Regelung basierend auf dem Leistungsfaktor. Sie verknüpft Vorteile hinsichtlich Genauigkeit mit einfacher Anwendbarkeit. Sie eignet sich sowohl für hintereinander geschaltete Reaktanzen, wie Transformator-, Streu- oder Leitungsinduktivitäten, aber auch für parallel geschaltete Reaktanzen wie Transformator-Hauptinduktivität oder Leitungskapazität.

Vorzugsweise umfasst das Primärsteuermodul ein Streckenmodell der Verbindungsleitung zwischen der Windenergieanlage und dem Anschlusspunkt an das Netz. In dem Streckenmodell können die Betriebsmittel berücksichtigt sein, welche die Windenergieanlage mit dem Netz verbinden. Die Betriebsmittel reduzieren die Wirkleistung aufgrund der in ihnen anfallenden Wirkverluste, es fallen in ihnen aber regelmäßig auch Blindverluste an, welche die in das Netz eingespeiste Blindleistung in Richtung "induktiv" oder "kapazitiv" verschieben. Damit ergibt sich am Netz ein anderer Leistungsfaktor als an der Windenergieanlage selbst. Das Streckenmodell ist dazu ausgebildet, aus dem Stromflussmaß einen Schätzwert für die Blindleistung zu bestimmen. In dem Streckenmodell brauchen nicht alle Betriebsmittel erfasst zu sein, sondern es genügen die dominierenden. Die Erfindung hat erkannt, dass dies ein (meist an der Windenergieanlage angeordneter) Mittelspannungstransformator und optional ein (am Anschluss der Verbindungsleitung an das Netz angeordneter) Hochspannungstransformator sind. Deren Blindwiderstände sind $X_T$ bzw. $X_H$. Beträgt beispielsweise der Spannungsabfall

$$U_1 = X * I \quad ( \ 1 \ )$$

ergibt sich mit einem Blindwiderstand von

$$X = X_T \quad ( \ 2 \ )$$

für den Mittelspannungstransformator, oder optional für den Mittel- und Hochspannungstransformator unter Vernachlässigung der Leitung an sich

$$X = X_T + X_H = C * X_T \quad ( \ 3 \ ),$$

eine Soll-Blindleistung in einem Dreiphasensystem

$$Q = 3 * U_1 * I = 3 * C * X_T * I^2 \quad ( \ 4 \ ),$$

wobei

$$C = 1 + \frac{X_H}{X_T} \quad ( \ 5 \ )$$

ist.

Durch Berücksichtigung des Streckenmodells wird es ermöglicht zu bestimmen, wie sich der Leistungsfaktor ausgehend von der Windenergieanlage selbst über die Betriebsmittel hin zum Netz verändert. Das Streckenmodell erlaubt eine Berechnung, auf welche Blindleistung die Windenergieanlage einzustellen ist, um am Netz einen gewünschten (und von den Anschlussrichtlinien geforderten) Ziel-Leistungsfaktor zu erreichen. Das Streckenmodell ermöglicht damit eine effektive Vorwärtsregelung, das heißt es kann allein aus dem Stromfluss der Windenergieanlage der Leistungsfaktor am Netz bestimmt werden. Auf diese Weise können die Blindverluste der Betriebsmittel entlang der Verbindungsleitung auf verblüffend einfache und effektive Weise kompensiert werden.

Besonders zweckmäßig ist es, wenn das Streckenmodell ein Funktionsglied zweiter Ordnung (enthaltend zumindest einen quadratischen Term und ggf. einen linearen und konstanten Term) umfasst. Das Funktionsglied zweiter Ordnung bildet die oben genannte Beziehung ab. Es ermöglicht eine einfache und genaue Vorwärtskompensation, bei der durch eine Strommessung, die an der windenergieanlage erfolgen kann, die Blindleistung an den Anschlusspunkt der Verbindungsleitung mit dem Netz bestimmt werden kann.

In vielen Fällen ist die Bestimmung des Stromflusswerts durch eine direkte Messung am einfachsten. Der Stromflusswert kann aber auf andere Weise bestimmt werden. Es kann auch vorgesehen sein, einen Beobachter zur Bestimmung des Stromflussmaßes vorzusehen, der aus einem, vorzugsweise mindestens zwei, anderen Parameter ein Ersatzmaß für das Stromflussmaß bestimmt. Mit dem Beobachter ist es ermöglicht, auch einen nicht direkt gemessenen oder messbaren Wert zu bestimmen. Der Beobachter erlaubt es, auf die Messung des Stroms zu verzichten. Dank des Beobachters ist somit eine eigene Messsensorik für den Strom überflüssig, was insbesondere bei den zunehmend häufiger verwendeten Windenergieanlagen hoher Leistungsklassen oder bei großen Windparks von Vorteil ist. Bei einer besonders vorteilhaften Ausführungsform, die gegebenenfalls unabhängigen Schutz verdient, sind der Beobachter und das Primärsteuermodul integriert ausgeführt. Die Integration ermöglicht es, auch ohne Berechnung von Zwischenwerten direkt aus den für den Beobachter verwendeten Parametern die gewünschte Sollblindleistung zu bestimmen. Es können dank des Verzichts auf Zwischengrößen numerisch effiziente Berechnungsweisen gewählt werden. Beispielsweise kann der Beobachter so ausgebildet sein, dass ein Stromflussmaß bestimmt wird aus in der Umrichtersteuerung ohnehin vorhandenen Parametern, wie beispielsweise die abgegebene Windrotordrehzahl, Wellenmoment und/oder der Netzspannung. Zwingend ist dies aber nicht, es kann auch eine Zwischengröße verwendet werden, der keine eigene physikalische Bedeutung zukommt. Mit einem solchen Beobachter kombiniert die Erfindung geringen messtechnischen Aufwand mit effizienter Berechnung, die sich vorzüglich zur Implementierung auf einem numerisch arbeitenden Prozessor eignet.

Zusätzlich zu dem Primärsteuermodul kann ein Korrekturmodul in der Umrichtersteuerung vorgesehen sein. Es ist dazu ausgebildet, in Abhängigkeit von der Spannung einen Korrekturwert für die Sollblindleistung zu bestimmen. Grundsätzlich kann es vorkommen, dass bei zu hoher Spannung ohne Kompensation ein überhöhter Blindleistungssollwert ausgegeben würde; umgekehrt bei zu niedriger Spannung ein zu geringer Blindleistungssollwert ausgegeben würde. Die Spannung wird vorzugsweise an der Windenergieanlage gemessen, und zwar auf Mittelspannungsebene; eine Messung vor dem Mittelspannungstransformator oder an dem Hochspannungstransformator soll aber nicht ausgeschlossen sein. Damit ist es ermöglicht, den Stromflusswert spannungsabhängig so zu korrigieren, dass das Primärsteuermodul den bei beliebiger Spannung bestimmten Strom so kompensiert, als ob Nennspannung oder eine andere gewählte Bezugsspannung vorliegen würde. Dazu kann vorgesehen sein, mit dem Korrekturmodul auf einen Exponenten in dem Primärsteuermodul einzuwirken, um beispielsweise in dem Fall des Funktionsglieds zweiter Ordnung von dem Nominalwert "Zwei" für den Exponenten abzuweichen. Die erfindungsgemäße Bestimmung des Blindleistungssollwerts aus einem Stromflusswert wird damit unabhängig von der tatsächlich vorhandenen Spannung. Weiter kann das Korrekturmodul mit Vorteil so weitergebildet sein, dass es Leitungskapazitäten und/oder Transformatorhauptinduktivitäten kompensiert. Deren Blindwiderstände wirken sich spannungsabhängig auf den Leistungsfaktor aus. Durch entsprechend angepasste Veränderung der Blindleistungsvorgabe kann so auch eine Kompensation für diese Betriebsmittel erreicht werden.

Weiter kann ein Teillastkorrekturmodul vorgesehen sein. Es hat sich gezeigt, dass mit einer gezielten Absenkung des Blindleistungssollwerts gegenüber dem rein stromabhängig berechneten Grundwert eine Verbesserung der Stabilität des Blindleistungsverhaltens bei Teillast erreicht werden kann. Zweckmäßigerweise geschieht dies dadurch, dass wie bereits vorstehend erläutert, der Exponent des Primärsteuermoduls verändert wird, und zwar vorzugsweise in dem Bereich zwischen Eins und Zwei.

Vorzugsweise ist ein Begrenzungsmodul für die Sollblindleistung vorgesehen. Es ist dem Primärsteuermodul nachgeschaltet und dazu ausgebildet, die Sollblindleistung auf einen voreinstellbaren Bereich zu begrenzen. Beispielsweise kann als Untergrenze ein Wert von Null vorgesehen sein, und damit die Sollblindleistung auf den Bereich des übererregten Betriebs beschränkt sein. Es hat sich gezeigt, dass ein Wechsel zwischen positiver und negativer Sollblindleistung sich ungünstig auf die Systemstabilität der Windenergieanlage auswirken kann. Als Obergrenze kann beispielsweise ein konstanter Wert vorgesehen sein, der einem gewünschten Leistungsfaktor bei etwa halber Last der Windenergieanlage entspricht. Bei höherer Last und entsprechend größerer von der Windenergieanlage eingespeister Wirkleistung bleibt die Sollblindleistung dann konstant auf den Wert der Obergrenze beschränkt, das heißt der Leistungsfaktor ändert sich. Die Erfindung hat erkannt, dass damit der Gefahr von instabilen Betriebspunkten der Windenergieanlage entgegengewirkt wird. Außerdem bietet dies den Vorteil, dass durch die Begrenzung der Sollblindleistung auf eine Obergrenze die beteiligten Komponenten weniger groß ausgelegt zu sein brauchen, und zwar insbesondere im Hinblick auf einen Betrieb bei Unterspannung. Mit der Begrenzung werden daher überraschenderweise Vorteile in Bezug auf Betriebssicherheit und Kostengünstigkeit miteinander kombiniert.

Die Erfindung bezieht sich entsprechend auf einen Windpark mit mehreren Windenergieanlagen und einem Parkmaster, wobei Werte für die Sollblindleistung von dem Parkmaster bestimmt und an die Windenergieanlagen übermittelt werden. Dazu weist der Parkmaster eine Blindleistungssteuereinrichtung auf, die über ein Primärsteuermodul verfügt. Dieses ist dazu ausgebildet, für die verschiedenen Windenergieanlagen des Windparks Werte für die jeweilige Sollblindleistung stromgeführt in Abhängigkeit von einem Stromflussmaß zu bestimmen. Die Werte werden an die Windenergieanlagen übermittelt, und die jeweilige lokale Steuerungseinrichtung der Windenergieanlagen stellt den Umrichter passend ein.

Ferner erstreckt sich die Erfindung auf entsprechende Verfahren zum Betreiben einer Windenergieanlage bzw. eines Windparks. Zur näheren Beschreibung wird auf obige Ausführungen verwiesen.

Die Erfindung wird nachfolgend unter Bezugnahme auf die Zeichnung näher erläutert, in der ein vorteilhaftes Ausführungsbeispiel dargestellt ist. Es zeigen:

Fig. 1     eine schematische Ansicht einer Windenergieanlage gemäß der Erfindung;

Fig. 2     eine schematische Ansicht eines Umrichters und seiner Steuerung;

Fig. 3     ein Ersatzschaltbild einer Verbindungsleitung;

Fig. 4     eine Detailansicht der Umrichtersteuerung gemäß einem ersten Ausführungsbeispiel;

Fig. 5     eine Detailansicht der Umrichtersteuerung gemäß einem zweiten Ausführungsbeispiel;

Fig. 6     eine Detailansicht der Umrichtersteuerung gemäß einem dritten Ausführungsbeispiel;

Fig. 7     eine schematische Ansicht eines Windparks gemäß der Erfindung; und

Fig. 8     verschiedene Kennlinien zur eingespeisten Blindleistung.

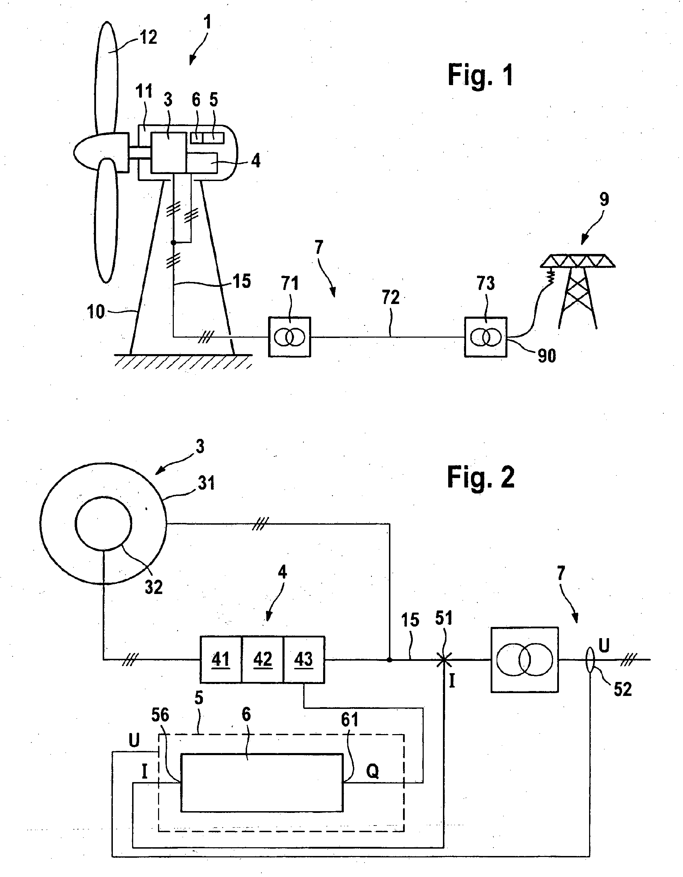

In Fig. 1 ist ein Ausführungsbeispiel für eine erfindungsgemäße Windenergieanlage dargestellt. Sie umfasst einen Turm 10 mit einem schwenkbar darauf angeordneten Maschinenhaus 11. An dessen einen Stirnseite ist ein Windrotor 12 drehbar angeordnet und über eine Antriebswelle mit einem Generator 3 verbunden. Bei dem Generator 3 handelt es sich vorzugsweise um eine doppelt gespeiste Asynchronmaschine, es können aber auch andere Bauarten wie Synchron-, Asynchron- oder permanenterregte Maschinen verwendet werden. Der Generator 3 ist elektrisch mit einem Umrichter 4 und weiter mit einer Leitung 15 verbunden. Der Umrichter 4 kann als Voll- oder Teilumrichter ausgeführt und geschaltet sein. Zur Betriebssteuerung der Windenergieanlage ist eine Steuereinrichtung 5 vorgesehen. Sie ist dazu ausgebildet, die Betriebsführung der Windenergieanlage durchzuführen. Dazu umfasst sie eine Umrichtersteuerung 6. Sie ist dazu ausgebildet, den Umrichter 4 - genauer gesagt dessen aktive Schaltelemente - anhand einstellbarer Vorgaben zu betreiben. Dies wird weiter unten noch näher erläutert werden. Die von dem Generator 3 erzeugte elektrische Leistung wird über die Leitung 15 bis zum Fuß des Turms 11 geführt. Dort ist eine Verbindungsleitung 7 angeschlossen, deren anderes Ende an ein Hochspannungs-Energieübertragungsnetz 9 angeschlossen ist. Die Verbindungsleitung 7 umfasst als Komponenten einen Mittelspannungstransformator 71, ein Mittelspannungsleitungssystem 72 und einen Hochspannungstransformator 73.

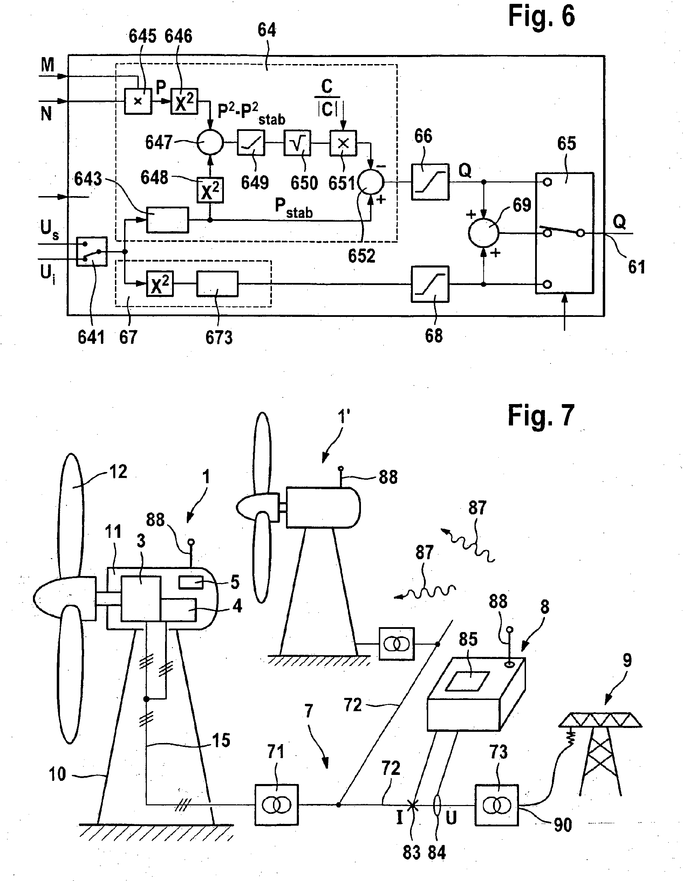

An das Mittelspannungsleitungssystem können weitere Windenergieanlagen 1' angeschlossen sein, die gleich oder ähnlich wie die Windenergieanlage 1 aufgebaut sind. Falls mehrere Windenergieanlagen 1, 1' zusammengefasst sind, so kann mit einem Parkmaster 8 ein Windpark gebildet sein (s. Fig. 7). Das Zusammenwirken des Parkmasters 8 mit den Windenergieanlagen 1, 1' wird später näher erläutert werden.

Die Steuereinrichtung 5 und ihr Zusammenwirken mit anderen Komponenten der Windenergieanlage sind in Fig. 2 dargestellt, wobei aus Gründen der Übersichtlichkeit eine einphasige Darstellung gewählt ist. Der Generator 3 ist als doppelt gespeiste Asynchronmaschine ausgeführt und umfasst einen Stator 31 und einen Rotor 32. Erstgenannter ist direkt an die Leitung 15 und an die Verbindungsleitung 7 angeschlossen, während letzterer mit ihr über einen Umrichter 4 verbunden ist. Der Umrichter 4 umfasst einen maschinenseitigen Wechselrichter 41, einen Zwischenkreis 42 sowie einen netzseitigen Wechselrichter 43. Der Aufbau solcher Umrichter ist an sich bekannt und braucht nicht näher erläutert zu werden. Wichtig ist, dass zumindest einer der Wechselrichter 41, 43 steuerbare aktive Schaltelemente (nicht dargestellt) aufweist, wie insbesondere GTO oder IGBT. Der netzseitige Wechselrichter ist an die vom Stator kommende Leitung 15 angeschlossen. Zwischen diesem Punkt und dem Mittelspannungstransformator 71 ist ein Stromsensor 51 vorgesehen. Er misst den gesamten von dem Generator 3 erzeugten und an das Netz 9 abgegebenen Strom und gibt ihn als ein Stromflusswert I aus. Der Stromflusswert I ist an einen Eingang 56 der Umrichtersteuerung 6 angeschlossen. Deren Aufbau und Funktionsweise wird nachfolgend näher erläutert. An einem Ausgang 61 gibt die Umrichtersteuerung ein Blindleistungssollsignal Q aus, das über die Steuereinrichtung 5 an den Umrichter 4 angelegt ist.

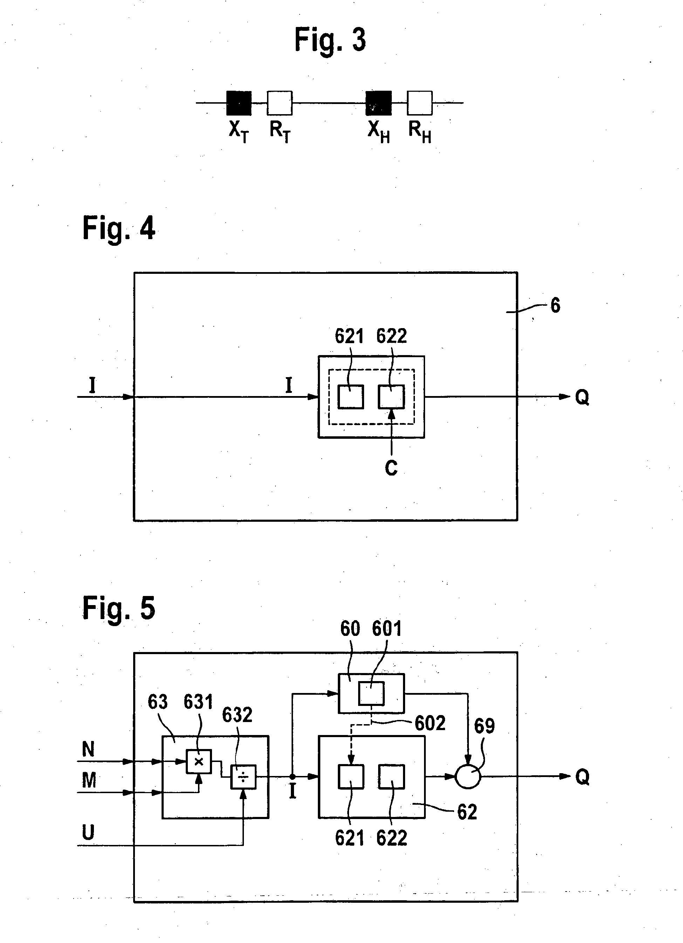

Die Umrichtersteuerung 6 weist in ihrer Grundform, wie sie in Fig. 4 dargestellt ist, ein Primärsteuermodul 61 auf. Es ist dazu ausgebildet, aus einem an dem Eingang 56 angelegten Stromflussmaß einen Wert für eine Sollblindleistung zu bestimmen, die am Ausgang 61 ausgegeben und von dem Umrichter 4 eingestellt wird. Dazu weist das Primärsteuermodul 61 ein einfaches Streckenmodell auf, das aus einem Funktionsglied zweiter Ordnung als Quadrierglied 621 und einem Proportionalglied 622, das eine Multiplikation mit einem einstellbaren Wert C bewirkt, besteht. Das vereinfachte Streckenmodell basiert auf folgenden Erwägungen: Der Mittelspannungstransformator 71 (und kurze Mittelspannungsleitungssysteme 72) können mit ausreichender Genauigkeit vereinfacht in einem R-X-Ersatzschaltbild (s. linker Bereich von Fig. 3) betrachtet werden. Bei einem Stromfluss I treten in diesem Bauelement Wirkverluste

$$P_V = 3 * R * I^2 \quad ( \ 6 \ )$$

und Blindverluste

$$Q_V = 3 * X * I^2 \quad ( \ 7 \ )$$

auf. Die im Betrieb tatsächlich erzeugten Blindverluste sind
praktisch direkt durch den Strom bestimmt und quadratisch davon abhängig. Anstelle einer komplizierten Blindleistungsbetrachtung oder Leistungsfaktorberechnung sieht die Erfindung daher vor, den Blindleistungssollwert stromgeführt zu bestimmen, und zwar nach der Formel

$$Q = C * 3 * X * I^2 \quad ( \ 8 \ )$$

mit C als einem Erweiterungsfaktor zur Bestimmung der Anpassung. Das Stromflussmaß ist der von dem Stromsensor 34 gemessene Strom I. Daraus wird durch Quadrieren ein Leistungsmaß gebildet, das durch Multiplikation mit dem Wert 3*C*X passend skaliert wird. Für den Wert C gilt hierbei folgendes: Soll nur der Mittelspannungstransformator kompensiert werden, so ist C = 1, soll nur eine teilweise Kompensation erfolgen, liegt C im Bereich zwischen 0 und 1, und wenn zusätzliche Impedanzen wie der Hochspannungstransformator kompensiert werden sollen (s. rechter Bereich von Fig. 3), liegt C im Bereich zwischen 1 und 3. Es kann gegebenenfalls C im Bereich zwischen 0 und -3 gewählt werden, wenn im untererregten Betrieb Blindleistung erzeugt werden soll. Letzteres ermöglicht den Einsatz der Erfindung auch an schwachen Netzen mit langen Leitungen zur Windenergieanlage.

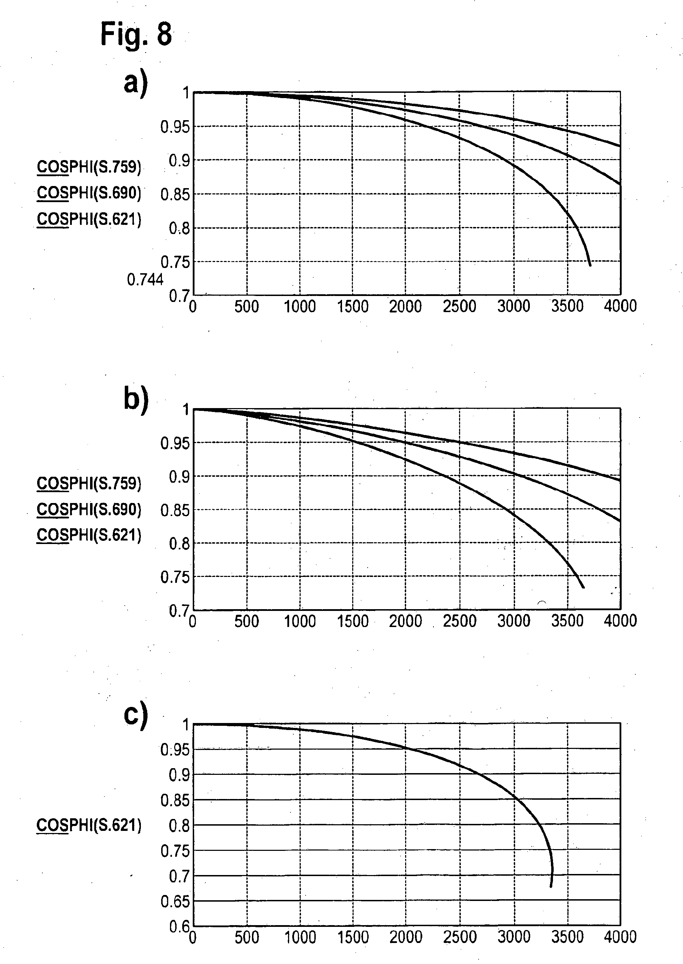

In Fig. 8a ist ein Diagramm dargestellt, das den mit der erfindungsgemäßen stromgeführten Blindleistungsvorgabe erreichten Verlauf des Leistungsfaktors cos φ (COSPHI) über der Wirkleistung (0 bis 4000 kW) bei verschiedenen Spannungen darstellt, und zwar sowohl für die Nennspannung (690 Volt) wie auch für eine 10%-ige Überspannung (759 Volt) und entsprechend eine 10%-ige Unterspannung (621 Volt). Zugrunde liegt dem Diagramm eine Auslegung auf einen Ziel-Leistungsfaktor von 0,975 bei einer Wirkleistung von 2000 kW und einer Nennspannung von 690 Volt (an der Leitung 15). Man erkennt deutlich, dass insbesondere im Bereich der Nennspannung der Ziel-Leistungsfaktor über einen weiten Bereich gut getroffen wird, mit einer durchaus erwünschten Verringerung bei sehr hoher Leistung.

Für das Stromflussmaß I wird in dem dargestellten Ausführungsbeispiel der Scheinstrom verwendet. Der dafür verwendete Stromsensor 51 kann verhältnismäßig einfach ausgeführt sein. In den meisten Anwendungsfällen ist der geforderte Leistungsfaktor nicht wesentlich verschieden von 1 (z. B. 0,95 oder 0,9), so dass der Blindleistungsanteil klein gegenüber dem Wirkleistungsanteil ist. Damit unterscheidet sich der Scheinstrom I nicht wesentlich von dem Wirkstrom, so dass als Stromflusswert für die Erfindung der einfacher zu ermittelnde Scheinstrom verwendet werden kann. Es soll aber nicht ausgeschlossen sein, als Stromflusswert den Wirkstrom heranzuziehen.

Zwar genügt für die Erfindung ein einfacher Messsensor 51 für die Bestimmung des Stromflussmaßes, jedoch fließt durch ihn der gesamte Strom der Windenergieanlage. Der Messsensor muss daher groß dimensioniert sein und ist entsprechend teuer. Alternativ zur direkten Messung kann vorgesehen sein, das Stromflussmaß indirekt aus mindestens einem anderen Parameter zu bestimmen. Zu diesem Zweck kann ein Beobachter vorgesehen sein, der das Stromflussmaß aus dem anderen Parameter indirekt bestimmt (s. Fig. 5). Vorzugsweise werden hierfür solche Parameter herangezogen, die ohnehin in der Steuerungseinrichtung 5 der Windenergieanlage 1 bzw. der Umrichtersteuerung 6 vorhanden sind. Es hat sich gezeigt, dass insbesondere die Drehzahl N des Windrotors 12 ein geeigneter Parameter ist. Bei modernen pitchgeregelten Windenergieanlagen wird die Drehzahl N bei Teillast in einem konstanten Verhältnis zur Windgeschwindigkeit gehalten, welche wiederum bestimmend ist für die von der Windenergieanlage erzeugte Leistung. Zur Ermittlung des Stromflussmaßes kann daher optional ein Beobachter 63 vorgesehen sein, an den die Drehzahl N des Windrotors als Parameter angelegt ist. Der Beobachter 63 kann so ausgebildet sein, durch Multiplikation der Drehzahl N mit dem Drehmoment M in einem Multiplikationsglied 631 eine Leistung zu bestimmen und daraus unter Berücksichtigung eines Spannungssignals gemäß einer Spannungsreferenz 413 durch Division 632 einen Wert für das Stromflussmaß zu bestimmen. Der Beobachter 63 bestimmt damit das Stromflussmaß aus Sollwerten.

Weiter kann ein Teillastkorrekturmodul 60 vorgesehen sein. Es ist dazu ausgebildet, bei Teillast den stromabhängig berechneten Blindleistungssollwert zu verringern. Dazu kann ein Kennlinienglied vorgesehen sein, das je nach Last eine Verringerung der Blindleistung um einen bestimmten Prozentsatz vorsieht. Zweckmäßiger ist eine unmittelbare Einwirkung auf das Primärsteuermodul 62, wie in Fig. 5 dargestellt. Dabei wird in Abhängigkeit von der Last das Streckenmodell 621 über eine Verknüpfungsleitung 602 verändert. Beispielsweise sind für ein Quadrierglied 621 des Streckenmodells reduzierte Exponenten (im Bereich zwischen 1 und 2) in einem Kennlinienglied 601 des Teillastkorrekturmoduls 60 enthalten. Bei Volllast wird dann regulär mit einem Exponenten von 2 gerechnet, während bei Teillast beilspielsweise mit Exponenten von 1,9 oder gar 1,8 gerechnet wird. Damit kann eine harmonische und gezielte Absenkung des Blindleistungssollwerts gegenüber dem reinen Grundwert erfolgen, was insbesondere in Bezug auf das dynamische Verhalten eine Verbesserung der Stabilität bewirkt. Die Absenkung bei Teillast ist in dem Diagramm in Fig. 8b über den gesamten Leistungsbereich für verschiedene Spannungen dargestellt.

Bei einer besonders bevorzugten Ausführungsform, die gegebenenfalls unabhängigen Schutz verdient, sind das Primärsteuermodul und der Beobachter als eine integrierte Einheit 64 ausgeführt. Mit der integrierten Einheit 64 ist eine direktere und damit effizientere Berechnung der Sollblindleistung Q ermöglicht. Zugrunde gelegt sind hierbei für ein dreiphasiges System die Beziehungen

$$S^2 = P^2 + Q^2$$
$$I = \frac{S}{\sqrt{3} * U} \qquad ( \ 9 \ )$$
$$Q = C * 3 * X_T * I^2$$

aus denen sich durch gegenseitiges Einsetzen die quadratische Gleichung

$$Q^2 - \frac{U^2}{C * X_T} * Q - P^2 = 0 \quad ( \ 10 \ )$$

ergibt. Sie weist zwei Lösungen auf, eine stabile Lösung

$$Q_1 = P_{stab} - sign(C) * \sqrt{P_{stab}^2 - P^2} \quad ( \ 11 \ )$$

und eine instabile Lösung

$$Q_2 = P_{stab} + sign(C) * \sqrt{P_{stab}^2 - P^2} \quad ( \ 12 \ )$$

mit

$$P_{stab} = \frac{U^2}{2 * C * X_T} \quad ( \ 13 \ )$$

als Stabilitätsgrenzwert für die Wirkleistung. Die integrierte Ausführung ermöglicht es, den Stabilitätsgrenzwert und nachfolgend einen stabilen Wert für die Sollblindleistung direkt zu berechnen. Eine solche integrierte Ausführung ist in Fig. 6 dargestellt. Als Eingangssignal sind die Drehzahl N und das Sollmoment M angelegt. Der Beobachter weist weiter ein Streckenmodell 643 auf, an das ein Spannungswert, also ein Sollspannungswert oder ein von einem Spannungssensor aufgenommener Wert für die Istspannung über einen Wahlschalter 641 angeschlossen ist. Das Streckenmodell 643 berücksichtigt den Blindwiderstand Xt des Mittelspannungstransformators und den Erweiterungsfaktor C. Daraus wird die Stabilitätsgrenze Pstab berechnet. Aus den Eingangssignalen für die Drehzahl N und das Sollmoment M wird mittels eines Multiplikationsglieds 645 ein Wert für die Istleistung P gebildet, und dieser mit dem Wert für die Stabilitätsgrenze Pstab und dem Vorzeichen des Faktors C durch die Elemente 646 bis 652 gemäß obiger Beziehung (13) verknüpft, und so die stabile Lösung für die Sollblindleistung gemäß der Beziehung (11) bestimmt. Weiter ist ein Begrenzer 66 vorgesehen, der die Werte für die Sollblindleistung auf einen Bereich zwischen einer wählbaren Untergrenze $Q_{min\_I}$ und einer wählbaren Obergrenze $Q_{max\_I}$ beschränkt. Dieses begrenzte Signal wird ausgegeben und kann an den Umrichter angelegt werden. Dank der direkten Berechnung brauchen Zwischengrößen nicht gesondert berechnet zu werden. Ein eigenständiger Stromsensor 51 ist hierbei entbehrlich, da die äquivalente Information für das Stromflussmaß - wie oben erläutert - aus dem integrierten Beobachter gewonnen werden kann. Die direkte Berechnung ist schnell, da Iterationen nicht ausgeführt zu werden brauchen. Weiter gewährleistet sie die Stabilität der berechneten Sollblindleistung.

Um die Genauigkeit weiter zu verbessern, kann ein Korrekturmodul 67 vorgesehen sein. Es dient dazu, die auf eine der oben genannten Weisen ermittelte Sollblindleistung so zu verändern, dass Spannungsabweichungen kompensiert werden. An einem Eingang des Korrekturmoduls 67 ist ein Signal für die Ist-Spannung angelegt, das von einem Spannungssensor 52 an der Verbindungsleitung 7 aufgenommen ist. Das Korrekturmodul 67 umfasst ein Streckenmodell 673, das dazu ausgebildet ist, Korrekturwerte für den Strom in Abhängigkeit von der Ist-Spannung zu ermitteln. Das Streckenmodellglied 673 bildet die von der Hauptinduktivität des Mittelspannungstransformators und dem Kapazitätsbelag der Verbindungsleitung bewirkten Blindwiderstände $X_{mag}$ und $X_c$ ab, und gibt einen Korrekturwert für die Blindleistung aus. Ein nachgeschalteter Begrenzer 68 begrenzt den Korrekturwert auf einen Bereich zwischen einer einstellbaren Untergrenze $Q_{min\_U}$ und einer einstellbaren Obergrenze $Q_{max\_U}$. Der so begrenzte Korrekturwert wird über ein Summationsglied 69 auf die von der integrierten Einheit 64 bestimmte Sollblindleistung addiert. Das Diagramm in Fig. 8c zeigt Leistungsfaktor COSPHI über der Wirkleistung P (im Bereich von 0 bis 4000 kW) bei reduzierter Spannung. Man erkennt deutlich die Verringerung des Leistungsfaktors und damit Erhöhung der Blindleistung verglichen mit der entsprechenden Unterspannungskennlinie in Fig. 8a.

Schließlich kann ein optionaler Modusselektor 65 vorgesehen sein. An seinen Eingängen sind die von dem Primärsteuermodul bestimmte Sollblindleistung, der von der Korrektureinrichtung 67 bestimmte Korrekturwert und die von dem Summationsglied 69 gebildete Sollblindleistung angelegt. Über einen Steuereingang wird der Modusselektor 65 so angesteuert, dass wahlweise eines der angelegten Signale am Ausgang 61 an den Umrichter 4 ausgegeben wird. Damit wird zusätzlich die Möglichkeit eröffnet, auf ein anderes Steuerungsregime umzuschalten, beispielsweise auf eine spannungsgeführte Blindleistungsvorgabe.

Das Spannungskorrekturmodul 67, der Begrenzer 66 und/oder der Modusschalter 65 können wahlweise auch bei den anderen Ausführungsformen (Fig. 4, 5) vorgesehen sein. Ebenso kann das Teillastkorrekturmodul 60 bei den anderen Ausführungsformen (Fig. 4, 6) vorgesehen sein.

Bei mehreren zu einem Windpark zusammengefassten Windenergieanlagen 1, 1' kann die erfindungsgemäße stromgeführte Bestimmung der Sollblindleistung zentral durch den Parkmaster 8 vorgenommen werden, anstatt dezentral in den einzelnen Windenergieanlagen 1, 1'. Dazu ist der Parkmaster 8 mit einer Leistungssteuereinrichtung 85 versehen, die zentral für die Windenergieanlagen 1, 1' des Windparks die Sollblindleistung bestimmt. An den Parkmaster 8 sind Sensoren 83, 84 für den Strom und die Spannung angeschlossen, mit der die von den Windenergieanlagen 1, 1' erzeugte elektrische Leistung über das Netz von parkinternen Verbindungsleitungen 7 über den Hochspannungstransformator 73 in das Netz 9 eingespeist wird. Aufbau und Funktionsweise der Leistungssteuereinrichtung 85 entsprechen obigen Erläuterungen in Bezug auf die einzelne Windenergieanlage. Der Windpark verfügt weiter über ein Kommunikationsnetz 87, über das Signale von dem Parkmaster 8 mit den Windenergieanlagen 1, 1' ausgetauscht werden. Das Kommunikationsnetz kann als eigenes Leitungsnetz ausgeführt sein, oder wie in Fig. 7 dargestellt als Funknetz. Der Parkmaster 8 und die Windenergieanlage 1, 1' verfügen jeweils über ein Funkmodul 88, welche mit der jeweiligen Steuereinrichtung 5, 85 verbunden sind. Die Windenergieanlagen 1, 1' erhalten über das Kommunikationsnetz von dem Parkmaster 8 jeweils ihren Sollwert für die Blindleistung, der dann entsprechend von der lokalen Steuereinrichtung 5 der einzelnen Windenergieanlagen mittels des Umrichters 4 eingestellt wird.

**Patentansprüche**

1. Windenergieanlage mit einem Rotor (12), einem damit angetriebenen Generator (3) mit einem Umrichter (4) zur Einspeisung elektrischer Leistung in ein Netz (9) über eine Verbindungsleitung (7) und einer Steuereinrichtung (5), wobei die Steuereinrichtung (5) eine Umrichtersteuerung (6) umfasst, welche zur Kontrolle eines Blindleistüngsanteils der Leistung gemäß einem Vorgabewert ausgebildet ist,
   **dadurch gekennzeichnet, dass**
   ein Primärsteuermodul (62, 64) zur Ausgabe eines Signals für eine Sollblindleistung (Q) vorgesehen ist, das zur stromgeführten Bestimmung der Sollblindleistung in Abhängigkeit von einem Stromflussmaß ausgebildet ist; wobei unter stromgeführt verstanden wird, dass die Bestimmung der Sollblindleistung allein oder zumindest hauptsächlich auf dem Strom basiert.

**2.** Windenergieanlage nach Anspruch 1,
**dadurch gekennzeichnet, dass**
das Primärsteuermodul (62, 64) ein Streckenmodell (621, 622) zur Bestimmung eines Schätzwerts für die Blindleistung aus dem Stromflussmaß aufweist.

**3.** Windenergieanlage nach einem der vorangehenden Ansprüche,
**dadurch gekennzeichnet, dass**
eine Messeinrichtung (51) zur Messung des durch die Verbindungsleitung (7) fließenden Stroms, vorzugsweise des Scheinstroms, vorgesehen ist.

**4.** Windenergieanlage nach einem der vorangehenden Ansprüche,
**dadurch gekennzeichnet, dass**
ein Beobachter (63) zur Bestimmung des Stromflussmaßes vorgesehen ist, der aus einem, vorzugsweise mindestens zwei, anderen Parameter ein Ersatzmaß für das Stromflussmaß bestimmt.

**5.** Windenergieanlage nach einem der vorhergehenden Ansprüche,
**dadurch gekennzeichnet, dass**
die Umrichtersteuerung (6) weiter ein Korrekturmodul (67) umfasst, das in Abhängigkeit von der Spannung einen Korrekturwert für die Sollblindleistung bestimmt.

**6.** Windenergieanlage nach Anspruch 5,
**dadurch gekennzeichnet, dass**
ein Modusselektor (65) vorgesehen ist, der wahlweise die Sollblindleistung mit oder ohne den Korrekturwert oder nur den Korrekturwert als Ausgangssignal ausgibt.

**7.** Windenergieanlage nach einem der vorhergehenden Ansprüche,
**dadurch gekennzeichnet, dass**
ein Begrenzungsmodul (66) dem Primärsteuermodul nachgeschaltet ist.

**8.** Windpark mit einer Mehrzahl von Windenergieanlagen (1, 1'), die elektrische Energie zur Abgabe in ein Netz (9) erzeugen, und einem Parkmaster (8) zur Steuerung der Windenergieanlage (1, 1'), wobei die Windenergieanlage (1, 1') einen Rotor (12), einen damit angetriebenen Generator (3) mit einem Umrichter (4) zur Einspeisung elektrischer Leistung in eine parkinterne Verbindungsleitung (7) aufweist, und der Parkmaster (8) eine Blindleistungssteuereinrichtung (85) aufweist,
**dadurch gekennzeichnet, dass**
die Blindleistungssteuereinrichtung (85) ein Primärsteuermodul (62, 64) zur Ausgabe eines Signals für eine Sollblindleistung (Q) aufweist, das zur stromgeführten Bestimmung der Sollblindleistung der Windenergieanlagen (1, 1') in Abhängigkeit von einem Stromflussmäß ausgebildet ist, wobei unter stromgeführt verstanden wird, dass die Bestimmung der Sollblindleistung allein oder zumindest hauptsächlich auf dem Strom basiert.

**9.** Windpark nach Anspruch 8,
**dadurch gekennzeichnet, dass**
die Blindleistungssteuereinrichtung (85) gemäß den Ansprüchen 2 bis 7 ausgebildet ist.

**10.** Verfahren zum Betrieb einer Windenergieanlage (1, 1') mit einem Rotor (12), einem damit angetriebenen Generator (3) mit einem Umrichter (4) zur Einspeisung elektrischer Leistung in ein Netz (9) über eine Verbindungsleitung (7) und einer Steuereinrichtung (5), wobei die Steuereinrichtung (5) eine Umrichtersteuerung (6) umfasst, welche einen Blindleistungsanteil der Leistung gemäß einem Vorgabewert kontrolliert, **gekennzeichnet durch**
Ermitteln eines Stromflussmaßes,
stromgeführtes Bestimmen einer Sollblindleistung in Abhängigkeit von dem Stromflussmaß, wobei unter stromgeführt verstanden wird, dass die Bestimmung der Sollblindleistung allein oder zumindest hauptsächlich auf dem Strom basiert.

**11.** Verfahren nach Anspruch 10,
**gekennzeichnet durch**
Verwenden eines Streckenmodells (621, 622) zum Berechnen eines Grundwerts für die Sollblindleistung aus dem Stromflussmaß.

**12.** Verfahren nach einem der Ansprüche 10 bis 11,
**gekennzeichnet durch**
Bestimmen eines Ersatzmaßes für das Stromflussmaß aus einem, vorzugsweise mindestens zwei, anderen Parameter mittels eines Beobachters (63).

**13.** Verfahren nach einem der Ansprüche 10 bis 12,
**gekennzeichnet durch**
Bestimmen eines Korrekturwerts für die Sollblindleistung in Abhängigkeit von der Spannung.

**14.** Verfahren zum Betreiben eines Windparks mit einer Mehrzahl von Windenergieanlagen (1, 1'), die elektrische Energie zur Abgabe in ein Netz (9) erzeugen mit einem Rotor (12), einem damit angetriebenen Generator (3) mit einem Umrichter (4) zur Einspeisung elektrischer Leistung in eine parkinterne Verbindungsleitung (7), wobei der Parkmaster (8) eine Leistungssteuereinrichtung (85) aufweist, welche einen Blindleistungsanteil der Leistung gemäß einem Vorgabewert kontrolliert,
**gekennzeichnet durch**
Ermitteln eines Strömflussmaßes,
stromgeführtes Bestimmen einer Sollblindleistung in Abhängigkeit von dem Stromflussmaß für die Windenergieanlagen (1, 1'); wobei unter stromgeführt verstanden wird, dass die Bestimmung der Sollblindleistung allein oder zumindest hauptsächlich auf dem Strom basiert.

**15.** Verfahren nach Anspruch 25,
**gekennzeichnet durch**
Bestimmen der Sollblindleistung gemäß den Ansprüchen 11 bis 13.

**Claims**

**1.** Wind energy plant having a rotor (12), a generator (3) which is driven by the latter and has a converter (4) for feeding electrical power into a network (9) via a connecting line (7), and a control device (5), the control device (5) comprising a converter controller (6) which is designed to control a reactive power component of the power according to a specified value,
**characterized in that**
a primary control module (62, 64) is provided for the purpose of outputting a signal for a desired reactive power (Q) and is designed to determine the desired reactive power in a current-led manner on the basis of a degree of current flow, in which case the term current-led is understood as meaning the fact that the determination of the desired reactive power is based solely or at least mainly on the current.

**2.** Wind energy plant according to Claim 1, **characterized in that** the primary control module (62, 64) has a section model (621, 622) for determining an estimated value for the reactive power from the degree of current flow.

**3.** Wind energy plant according to one of the preceding claims, **characterized in that** a measuring device (51) is provided for the purpose of measuring the current flowing through the connecting line (7), preferably the apparent current.

**4.** Wind energy plant according to one of the preceding claims, **characterized in that** an observer (63) is provided for the purpose of determining the degree of current flow and determines an equivalent degree for the degree of current flow from one other parameter, preferably at least two other parameters.

**5.** Wind energy plant according to one of the preceding claims, **characterized in that** the converter controller (6) also comprises a correction module (67) which determines a correction value for the desired reactive power on the basis of the voltage.

**6.** Wind energy plant according to Claim 5, **characterized in that** a mode selector (65) is provided and either outputs the desired reactive power with or without the correction value or outputs only the correction value as an output signal.

**7.** Wind energy plant according to one of the preceding claims, **characterized in that** a limiting module (66) is connected downstream of the primary control module.

8. Wind farm having a plurality of wind energy plants (1, 1') which generate electrical energy for delivery to a network (9), and a farm master (8) for controlling the wind energy plant (1, 1'), the wind energy plant (1, 1') having a rotor (12), a generator (3) which is driven by the latter and has a converter (4) for feeding electrical power into a connecting line (7) inside the farm, and the farm master (8) having a reactive power control device (85),
**characterized in that**
the reactive power control device (85) has a primary control module (62, 64) for outputting a signal for a desired reactive power (Q), which primary control module is designed to determine the desired reactive power of the wind energy plants (1, 1') in a current-led manner on the basis of a degree of current flow, in which case the term current-led is understood as meaning the fact that the determination of the desired reactive power is based solely or at least mainly on the current.

9. Wind farm according to Claim 8, **characterized in that** the reactive power control device (85) is designed according to Claims 2 to 7.

10. Method for operating a wind energy plant (1, 1') having a rotor (12), a generator (3) which is driven by the latter and has a converter (4) for feeding electrical power into a network (9) via a connecting line (7), and a control device (5), the control device (5) comprising a converter controller (6) which controls a reactive power component of the power according to a specified value,
**characterized by**
determination of a degree of current flow, determination of a desired reactive power in a current-led manner on the basis of the degree of current flow, in which case the term current-led is understood as meaning the fact that the determination of the desired reactive power is based solely or at least mainly on the current.

11. Method according to Claim 10, **characterized by** use of a section model (621, 622) for calculating a basic value for the desired reactive power from the degree of current flow.

12. Method according to either of Claims 10 and 11, **characterized by** determination of an equivalent degree for the degree of current flow from one other parameter, preferably at least two other parameters, by means of an observer (63).

13. Method according to one of Claims 10 to 12, **characterized by** determination of a correction value for the desired reactive power on the basis of the voltage.

14. Method for operating a wind farm having a plurality of wind energy plants (1, 1') which generate electrical energy for delivery to a network (9) and have a rotor (12), a generator (3) which is driven by the latter and has a converter (4) for feeding electrical power into a connecting line (7) inside the farm, the farm master (8) having a power control device (85) which controls a reactive power component of the power according to a specified value,
**characterized by**
determination of a degree of current flow, determination of a desired reactive power in a current-led manner on the basis of the degree of current flow for the wind energy plants (1, 1'), in which case the term current-led is understood as meaning the fact that the determination of the desired reactive power is based solely or at least mainly on the current.

15. Method according to Claim 25, **characterized by** determination of the desired reactive power according to Claims 11 to 13.

**Revendications**

1. Eolienne avec un rotor (12), un générateur (3) entraîné par celui-ci, avec un convertisseur (4) pour l'introduction d'une puissance électrique dans un réseau (9) par l'intermédiaire d'une ligne de liaison (7) et un dispositif de commande (5), le dispositif de commande (5) comprenant une commande de convertisseur (6) qui est conçue pour le contrôle d'une composante réactive de la puissance selon une valeur de consigne,
**caractérisée en ce que**
un module de commande primaire (62, 64) est prévu pour la sortie d'un signal pour une puissance réactive de consigne (Q), qui est conçu pour la détermination à l'aide d'un courant de la puissance réactive de consigne en fonction d'une mesure de flux de courant; par « à l'aide d'un courant », on entend que la détermination de la puissance réactive de consigne est basée uniquement ou au moins principalement sur le courant.

EP 2 143 186 B1

**2.** Eolienne selon la revendication 1, **caractérisée en ce que** le module de commande primaire (62, 64) comprend un modèle de trajectoire (621, 622) pour la détermination d'une valeur estimée pour la puissance réactive à partir de la mesure du flux de courant.

**3.** Eolienne selon l'une des revendications précédentes, **caractérisée en ce que** un dispositif de mesure (51) est prévu pour la mesure du courant s'écoulant dans la ligne de liaison (7), de préférence du courant total.

**4.** Eolienne selon l'une des revendications précédentes, **caractérisée en ce que** un observateur (63) est prévu pour la détermination de la mesure du flux de courant, qui détermine, à partir d'un autre paramètre, de préférence d'au moins deux paramètres, une mesure de remplacement pour la mesure du flux de courant.

**5.** Eolienne selon l'une des revendications précédentes, **caractérisée en ce que** la commande du convertisseur (6) comprend en outre un module de correction (67) qui détermine, en fonction de la tension, une valeur de correction pour la puissance réactive de consigne.

**6.** Eolienne selon la revendication 5, **caractérisée en ce que** un sélecteur de mode (65) est prévu, qui génère au choix la puissance réactive de consigne avec ou sans la valeur de correction ou uniquement la valeur de correction en tant que signal de sortie.

**7.** Eolienne selon l'une des revendications précédentes, **caractérisée en ce que** un module de limitation (66) est branché en aval du module de commande primaire.

**8.** Parc d'éoliennes avec une pluralité d'éoliennes (1, 1'), qui génèrent une énergie électrique à introduire dans un réseau (9), et un maître de parc (8) pour la commande de l'éolienne (1, 1'), l'éolienne (1, 1') comprenant un rotor (12), un générateur (3) entraîné par celui-ci, avec un convertisseur (4) pour l'introduction de puissance électrique dans une ligne de liaison (7) interne au par cet le maître de parc (8) comprenant un dispositif de commande de puissance réactive (85),
**caractérisé en ce que**
le dispositif de commande de puissance réactive (85) comprend un module de commande primaire (62, 64) pour la génération d'un signal pour une puissance réactive de consigne (Q), qui est conçu pour la détermination à l'aide d'un courant de la puissance réactive de consigne des éoliennes (1, 1') en fonction d'une mesure de flux de courant; par « à l'aide d'un courant » on entend que la détermination de la puissance réactive de consigne est basée uniquement ou au moins principalement sur le courant.

**9.** Parc d'éoliennes selon la revendication 8, **caractérisé en ce que** le dispositif de commande de puissance réactive (85) est conçu selon les revendications 2 à 7.

**10.** Procédé d'exploitation d'une éolienne (1, 1') avec un rotor (12), un générateur (3) entraîné par celui-ci, avec un convertisseur (4) pour l'introduction d'une puissance électrique dans un réseau (9) par l'intermédiaire d'une ligne de liaison (7) et un dispositif de commande (5), le dispositif de commande (5) comprenant une commande de convertisseur (6) qui contrôle une composante réactive de la puissance selon une valeur prédéterminée,
**caractérisé par**
la détermination d'une mesure du flux de courant,
la détermination, à l'aide d'un courant, d'une puissance réactive de consigne en fonction de la mesure du flux de courant ; par « à l'aide d'un courant », on entend que la détermination de la puissance réactive de consigne est basée uniquement ou au moins principalement sur le courant.

**11.** Procédé selon la revendication 10, **caractérisé par** l'utilisation d'un modèle de trajectoire (621, 622) pour le calcul d'une valeur de base pour la puissance réactive de consigne à partir de la mesure du flux de courant.

**12.** Procédé selon l'une des revendications 10 à 11, **caractérisé par** la détermination d'une mesure de remplacement pour la mesure de flux de courant à partir d'un paramètre, de préférence d'au moins deux paramètres, au moyen d'un observateur (63).

**13.** Procédé selon l'une des revendications 10 à 12, **caractérisé par** la détermination d'une valeur de correction pour la puissance réactive de consigne en fonction de la tension.

**14.** Procédé pour l'exploitation d'un parc d'éoliennes avec une pluralité d'éoliennes (1, 1') qui génèrent une énergie électrique à introduire dans un réseau (9), avec un rotor (12), un générateur (3) entraîné par celui-ci, avec un convertisseur (4) pour l'introduction d'une puissance électrique dans une ligne de liaison (7) interne au parc, le maître de parc (8) comprenant un dispositif de contrôle de puissance (85) qui contrôle une composante réactive de la puissance selon une valeur prédéterminée,

**caractérisé par**

la détermination d'une mesure du flux de courant,

la détermination, à l'aide d'un courant, d'une puissance réactive de consigne en fonction de la mesure du flux de courant pour les éoliennes (1, 1') ; par « à l'aide d'un courant », on entend que la détermination de la puissance réactive de consigne est basée uniquement ou au moins principalement sur le courant.

**15.** Procédé selon la revendication 25, **caractérisé par** la détermination de la puissance réactive de consigne selon les revendications 11 à 13.

## Fig. 1

## Fig. 2

# Fig. 3

$X_T$    $R_T$         $X_H$    $R_H$

# Fig. 4

621   622

I          I                    Q

C

6

# Fig. 5

60   601

63   631   632

N

M                          I

U

602   69

621   622

62

Q

# Fig. 6

# Fig. 7

# Fig. 8

**a)**

COSPHI(S.759)
COSPHI(S.690)
COSPHI(S.621)

0.744

**b)**

COSPHI(S.759)
COSPHI(S.690)
COSPHI(S.621)

**c)**

COSPHI(S.621)

**IN DER BESCHREIBUNG AUFGEFÜHRTE DOKUMENTE**

**In der Beschreibung aufgeführte Patentdokumente**

- US 5225712 A
- EP 1512869 A1

- US 20060012181 A